# EUROPEAN PATENT SPECIFICATION

(11) **EP 1 104 147 B1**
(45) Date of publication and mention of the grant of the patent: **19.05.2010**
(21) Application number: 00125574.4
(22) Date of filing: 22.11.2000
(51) Int. Cl.: H04M 1/2745

(54) **Telephone set having removable storage medium**
Telefon mit Wechselspeichermedium
Téléphone ayant un support de stockage d'information amovible

(30) Priority: 24.11.1999 JP 33301699
(43) Date of publication of application: 30.05.2001
(60) Divisional application: 05020469.2
(73) Proprietor: KYOCERA CORPORATION, Kyoto-shi, Kyoto 612-8501 (JP)
(72) Inventor: Yamamoto,Shuji, Kyocera Corp.Yokohama Office, Yokohama-shi,Kanagawa 224-8502 (JP)
(74) Representative: Bohnenberger, Johannes

(56) References cited:
- EP-A- 0 860 970
- WO-A-98/30053

## Description

### BACKGROUND OF THE INVENTION

The present invention relates to a telephone set having interface of a removable storage medium for storing a telephone directory, and particularly to technology of extending a telephone directory of this removable storage medium.

Recently, a telephone set comes to have a higher function year and year, and it is natural now that the telephone set has a removable storage medium such as a memory card. Under this circumstance, it has been already disclosed in JP-A-8-18633 to cause the telephone set to perform many functions by transferring onto and storing a newly designed telephone function in the removable storage medium from a personal computer, and changing data structure of the telephone set itself by the storage medium on/in which the new function is transferred and recorded to expand data. On the other, a SIM card (subscriber identity module card) used in a GSM type portable telephone is a similar removable storage medium. However, this SIM card is used in order to store mainly private data of a user and telephone number data (telephone directory), and the user of the portable telephone makes a use contract with a telephone company due to this SIM card. Therefore, this SIM card must keep interchangeability so that any maker or any model can use the SIM card.

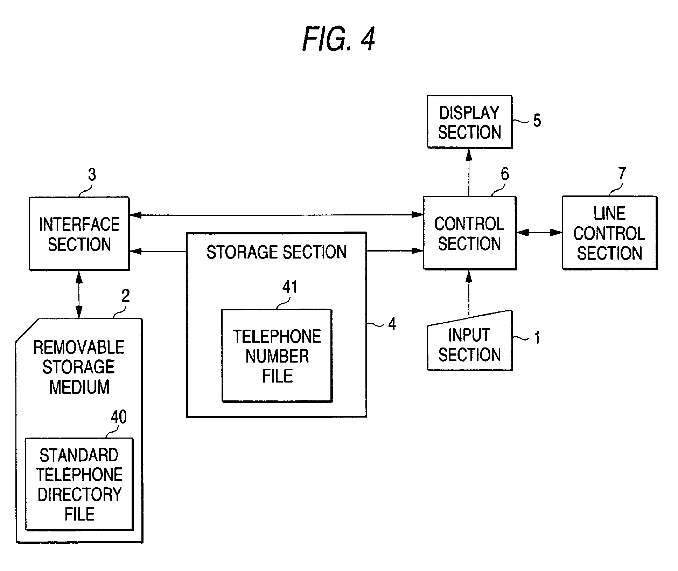

Referring to Fig. 4, the constitution of the conventional telephone set that can be equipped with the removable storage medium for telephone directory will be described. Fig. 4 is a block diagram of the constitution of the conventional telephone set that can be equipped with the removable storage medium for telephone directory. As shown in Fig. 4, the conventional telephone set that can equipped with the removable storage medium for telephone directory is composed of an input section 1 having input keys for inputting instructions given to the telephone directory; a removable storage medium 2 for storing telephone directory; an interface section 3 for reading and writing data together with the removable storage medium 2; a storage section 4 having a telephone number file 41 that stores a telephone number and other information in a telephone set body; a display section 5 for displaying the telephone number; a control section 6 for performing processing and control of the whole of the device; and a line control section 7 for controlling a telephone line.

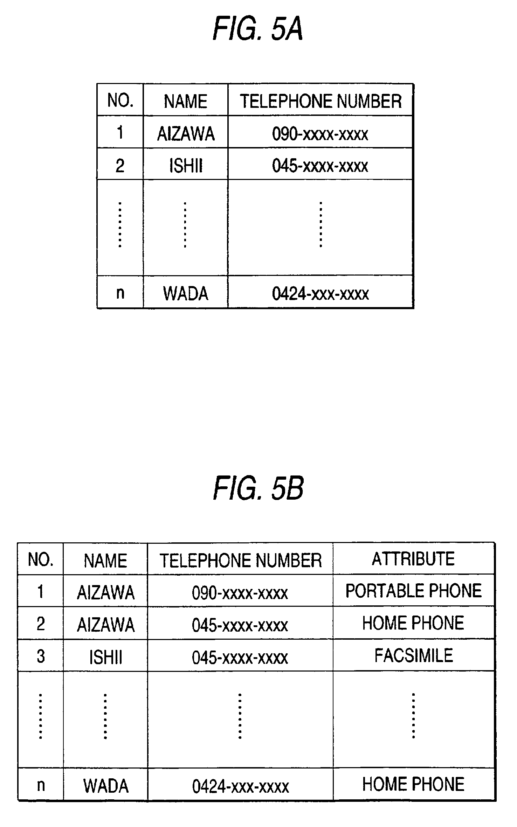

Here, referring to Figs. 5A and 5B, the conventional telephone number file 41 will be described. Fig. 5A is a schematic explanatory view of the conventional telephone number file 41. The conventional telephone number file 41 includes names and the corresponding telephone numbers as shown in Fig. 5, and the registered telephone numbers are arranged in order of memory position, in order of input, or in order of alphabet and recorded. It is natural that the telephone number file 40 within the removable storage medium has the same type as the telephone number file 41.

Next, Fig. 5B is a schematic explanatory view in case that data is newly extended in the conventional telephone number file 41. In case that the data in the telephone directory is extended in the conventional telephone set, regarding the telephone directory within the telephone set body, the data structure is changed as shown in Fig. 5B. Here, the telephone number file 41 shown in Fig. 5B is made by adding attribute data such as a telephone mode and a group number to the telephone directory shown in Fig. 5A. This file is composed of plural records (taking data in one line as one record). The telephone mode described here is a kind of a telephone, for example, normal telephone, FAX, pager (pocket bell), portable telephone, and the like. Hereby, the function of the telephone can be selected and limited.

However, in case that data is newly expanded in relation to the telephone directory within the telephone set body (for example, in case that the telephone mode and group number are added), the data structure of the telephone number file within the removable storage medium is not changed and it is necessary to differently deal the telephone directory within the telephone set body and the telephone directory within the removable storage medium. Further, there is problem that such the function cannot be added to the telephone directory within the removable storage medium. Namely, in case that the data structure is changed in the storage medium in which the data structure is unified by a common standard such as the SIM card, the storage medium cannot be used in the other terminals, for example, in a terminal that uses the previous data structure, so that a problem is arisen that a new data cannot be extended in an IC card such as the SIM card that prizes interchangeability.

### SUMARY OF THE INVENTION

The invention has been made in view of the above circumstances.

An object of the invention is to provide the telephone set in which a removable storage medium for telephone directory enables extension similarly to the telephone directory within the telephone set body. In case that the telephone directory within the removable medium the data structure of which cannot be changed is extended, the data to be extended is stored in the telephone set body, and associating this extended data portion in the telephone set body with the telephone directory in the telephone set body and the telephone directory in the removable storage medium. Thus, the function of the telephone set is systematically extended.

In order to solve the above problems, a telephone set as claimed in claim 1 is proposed.

Advantageous embodiments of the invention are claimed in claims 2-4.

EP 1 188 297, published on 28.12.00 under number WO/00/79773, discloses a very similar telephone set, but it is not comprised in the state of the art according to Articles 54(3) and (4) EPC for the contracting state IT.

### BRIEF DESCRIPTION OF THE DRAWINGS

Fig. 1 is a block diagram showing one embodiment of a telephone set according to the invention;
Fig. 2 is a schematic explanatory view of a telephone number file and telephone number extension file in the telephone set according to the invention;
Fig. 3 is a schematic explanatory view of a telephone number file and telephone number extension file that can correspond to plural telephone directory storage mediums that are attachable and detachable in the telephone set according to the invention;
Fig. 4 is a constitutional block diagram of a conventional telephone set that can be equipped with a telephone directory storage medium that is attachable and detachable;
Fig. 5A is a schematic explanatory view of a conventional telephone number file 41; and
Fig. 5B is a schematic explanatory view in which data is newly expanded in the conventional telephone number file.

### DETAILED DESCRIPTION OF THE PREFERRED EMBODIMENTS

One embodiment of the invention will be described with reference to drawings. Portions indicating the same constitution are marked with the same sign.

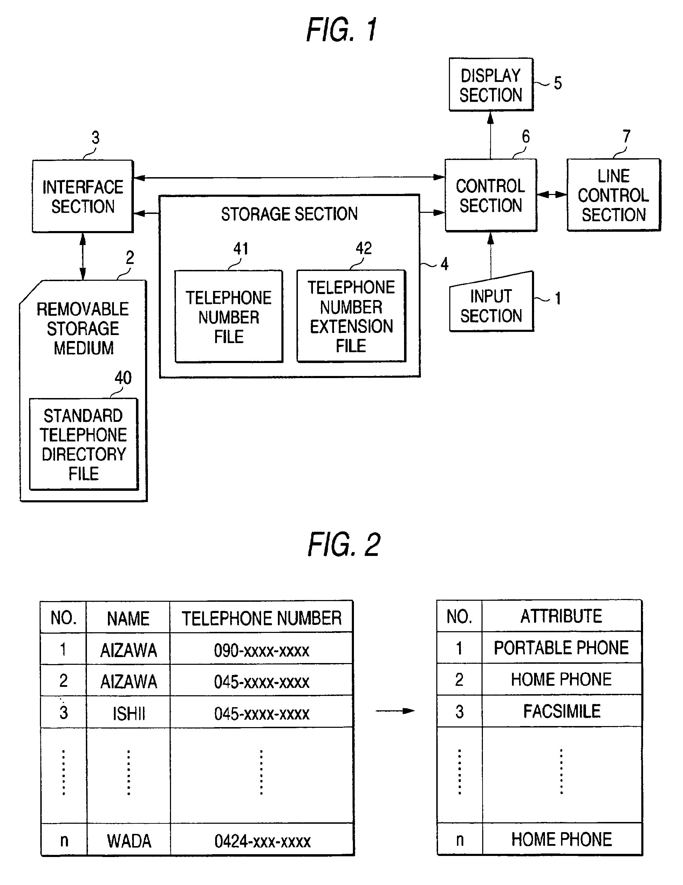

Referring to a block diagram of Fig. 1, one embodiment of a telephone set according to the invention will be described. The telephone in Fig. 1 is composed of an input section 1 provided with input keys for inputting instruction given to a telephone directory; a removable storage medium 2 for storing telephone directory; an interface section 3 for performing reading and writing of data together with the removable storage medium 2; a storage section 4 provided with a telephone number file 41 that has recorded a telephone number and the others in a telephone set body; a display section 5 for displaying a telephone number; a control section 6 for performing processing and control of the whole of the device; and a line control section 7 for controlling a telephone line. The storage section 4 of the telephone set body is provided with the telephone number file 41 that has recorded the telephone number and the like in the telephone set body and a telephone number extension file 42 that records information of which data is newly extended. The telephone set according to one embodiment of the invention includes in the telephone set body a connection interface in relation to the telephone directory storage medium that is attachable and detachable, and a partial telephone directory extension region corresponding to the telephone directory.

Next, an operational processing of the telephone set in the invention will be described. In Fig. 1, when a name is input through the keys in the input section 1 to call out a telephone number, the control section 6 searches for the corresponding telephone number from the storage section 4. In case that a result of the search exists in the telephone number file 41, the corresponding telephone number record is returned to the control section 6, the control section 6 sends its record to the display section 5, and the display section 5 displays any one of the telephone number, the name and the classification; any one combination of them; or all of them. In case that the result of the search does not exist in the telephone number file 41, a standard telephone directory file 40 in the removable storage medium 2 is searched for through the interface section 3. In case that the corresponding record exists in the removable storage medium 2, the interface section 3 returns its telephone number record to the storage section 4. The storage section 4 reads the record of the classification corresponding to the returned telephone number record from the telephone number extension file 42, makes one record, and returns its record to the control section 6. The control section 6 sends its record to the display section 5, and the display section 5 displays any one of the telephone number, the name and the classification; any one combination of them; or all of them.

Next, the telephone number file 41 and the telephone number extension file 42 will be described referring to Fig. 2. Fig. 2 is a schematic explanatory view of the telephone number file 41 and the telephone number extension file 42 of the invention. As shown in Fig. 2, only the addition data portions (attribute) other than the information (name and telephone number) that can be stored in the removable storage medium 2 is prepared in the telephone number extension file 42 correspondingly to the standard telephone directory file 40 within the removable storage medium 2. This each record is caused to correspond to the standard telephone directory file 40 within the removable storage medium 2, whereby when the data within the removable storage medium 2 is displayed, the corresponding data is readout from the telephone number extension file 42 and is displayed in the display section 5. Hereby, the standard telephone directory file 40 in the telephone directory storage medium 2 has the same constitution as the telephone directory within the telephone set body (telephone number file 41), and their telephone directories can be similarly dealt with. Further, the telephone number file 41 within the telephone set body records a series of data including the addition data portions.

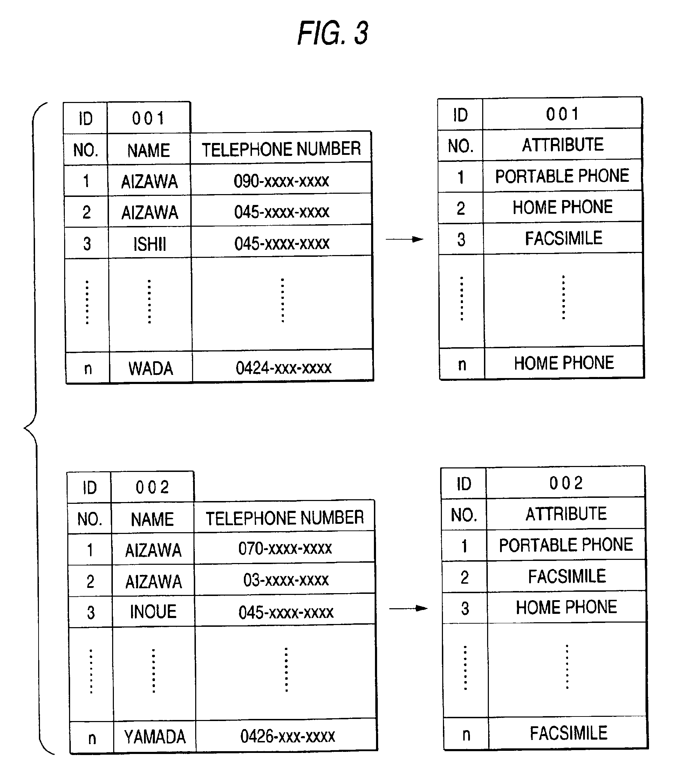

Further, another constitution of the telephone number file 41 and the telephone number extension file 42 of the invention will be described referring to Fig. 3. Fig. 3 is a schematic explanatory view of the telephone number file 41 and the telephone number extension file 42 that can correspond to the plural removable storage mediums for telephone directories. As shown in Fig. 3, identification data is entered in each removable storage medium 2 so that the files 41, 42 can correspond to the plural removable storage mediums 2, and the plural data regions are formed also in the telephone number extension file 42 of the telephone set. And, every time the removable storage medium 2 is mounted on the telephone set, the identification data is verified in the control section 6 of the telephone set, and the telephone number extension file 42 of which the identification data coincides with that of the telephone directory storage medium is read out, whereby the files 41, 42 correspond to the plural removable storage mediums, which prevents the different constitution of the telephone directory from being produced.

As described above, by providing the extension data portions within the telephone set body and storing them, the removable storage medium can be also extended similarly to the telephone directory within the telephone set body, so that the telephone set can be supplied, in which the telephone directory in the telephone set body and the telephone directory in the removable storage medium are systematically extended in function.

In the invention, since the telephone number extension file is not stored in the removable storage medium, it is possible to transmit/exchange data of the telephone number extension file between the terminals or also to save/read out it in/from another storage medium that is attachable and detachable.

As described above, by using the portable telephone unit of the invention, in case that the telephone directory in the removable storage medium for telephone directory, the data structure of which cannot be changed, is expanded, the extension data portions are stored in the telephone set body, whereby the telephone directory in the removable storage medium can be expanded similarly to the telephone directory within the telephone set, so that it is possible to provide the telephone set in which the telephone directory in the telephone set body and the telephone directory in the removable storage medium are systematically expanded in function.

## Claims

1. A telephone set comprising:
an interface (3) connected to a removable storage medium (2) for storing information, in which a standard telephone directory is stored; and
storage means (4) for storing a telephone number file (41) containing a telephone directory with the same structure of the standard telephone directory stored in the removable storage medium, and an extended data portion;
**characterized in that**
the storage means is further adapted to store a telephone number extension file (42) containing an extended data portion associated to the standard telephone directory stored in said removable storage medium.

2. The telephone set according to Claim 1, wherein said storage medium is a SIM card.

3. The telephone set according to either Claims 1 to 2, wherein said telephone set is a mobile radio communication unit.

4. The telephone set according to Claim 3, wherein said mobile radio communication unit is a GSM type mobile radio communication unit.

## Patentansprüche

1. Fernsprechapparat, der Folgendes aufweist:
eine Schnittstelle (3), die mit einem entfernbaren Speichemedium (2) zum Speichern von Information verbunden ist, in dem ein Standard-Fernsprechbuch gespeichert ist; und
eine Speichereinrichtung (4) zum Speichern einer Telefonnummerndatei (41), die ein Fernsprechbuch mit der gleichen Struktur wie das in dem entfernbaren Speichermedium gespeicherte Standard-Fernsprechbuch und einen erweiterten Datenbereich enthält;
**dadurch gekennzeichnet, dass**
die Speichereinrichtung ferner ausgebildet ist, um eine Telefonnummern-Erweiterungsdatei (42) zu speichern, die einen erweiterten Datenbereich enthält, der dem in dem entfernbaren Speichermedium gespeicherten Standard-Fernsprechbuch zugeordnet ist.

2. Fernsprechapparat nach Anspruch 1,
wobei das Speichermedium eine SIM-Karte ist.

3. Fernsprechapparat nach Anspruch 1 oder 2,
wobei der Fernsprechapparat eine Mobilfunkeinheit ist.

4. Fernsprechapparat nach Anspruch 3,
wobei die Mobilfunkeinheit eine GSM-Mobilfunkeinheit ist.

## Revendications

1. Poste téléphonique comprenant :
une interface (3) qui est connectée à un support de stockage amovible (2) pour stocker une information, dans lequel un répertoire de téléphone standard est stocké ; et
un moyen de stockage (4) pour stocker un fichier de numéros de téléphone (41) qui contient un répertoire de téléphone présentant la même structure que celle du répertoire de téléphone standard qui est stocké dans le support de stockage amovible, et une partie de données étendue,
**caractérisé en ce que** :
le moyen de stockage est en outre adapté pour stocker un fichier d'extension de numéros de téléphone (42) qui contient une partie de données étendue qui est associée au répertoire de téléphone standard qui est stocké dans ledit support de stockage amovible.

2. Poste téléphonique selon la revendication 1, dans lequel ledit support de stockage est une carte SIM.

3. Poste téléphonique selon la revendication 1 ou 2, dans lequel ledit poste téléphonique est une unité de communication radio mobile.

4. Poste téléphonique selon la revendication 3, dans lequel ladite unité de communication radio mobile est une unité de communication radio mobile du type GSM.
